# NEUE EUROPÄISCHE PATENTSCHRIFT

(11) **EP 0 322 597 B2**
(45) Veröffentlichungstag und Bekanntmachung des Hinweises auf die Entscheidung über den Einspruch: **13.08.1997**
(45) Hinweis auf die Patenterteilung: 17.03.1993
(21) Anmeldenummer: 88120209.7
(22) Anmeldetag: 03.12.1988
(51) Int. Cl.: F16K 11/074, F16K 39/00

(54) **Einhebel-Mischventil mit Druckausgleichsvorrichtung**
Single handle mixing valve with a pressure compensating device
Robinet mélangeur à monocommande avec dispositif d'équilibrage de pression

(30) Priorität: 28.12.1987 CH 5084/87
(43) Veröffentlichungstag der Anmeldung: 05.07.1989
(73) Patentinhaber: KWC AG, CH-5726 Unterkulm (CH)
(72) Erfinder: Hochstrasser, Ferdinand, CH-5105 Auenstein (CH)
(74) Vertreter: Patentanwälte Schaad, Balass, Menzl & Partner AG

(56) Entgegenhaltungen:
- DE-A- 3 435 411
- DE-A- 3 541 840
- FR-A- 2 506 886
- US-A- 3 420 272
- US-A- 3 921 659
- US-A- 4 022 242

## Beschreibung

Gegenstand der Erfindung ist ein Mischventil mit im Ventilgehäuse angeordneter durch ein Steuerscheibenpaket gebildeter Mengen- und Temperatursteuervorrichtung der eine Druckausgleichsvorrichtung vorgeschaltet ist, wobei die Kalt- und Warmwasserzuführstutzen radial zur Durchströmrichtung des Steuerpakets durch die Wand des Ventilgehäuses in die Druckausgleichsvorrichtung münden, wobei in der letzteren eine Strömungsumlenkung um 90° erfolgt. Ein derartiges Mischventil gemäß Oberbegriff von Anspruch 1 ist aus der US-A-4 022 242 bekannt.

Mischventile dieser Art besitzen den Vorteil relativ geringer Axialabmessungen. Da die Strömungsumlenkung in der Druckausgleichsvorrichtung selbst erfolgt, erhält man eine in Durchströmrichtung relativ kurze und somit sehr kompakte Armatur. Bei den aus der US-A-4 022 242 bekanntgewordenen Mischventilen, bei welchen der Temperatursteuervorrichtung eine Druckausgleichsvorrichtung vorgeschaltet ist, sind diese beiden Vorrichtungen zu einer Einheit im Ventilgehäuse zusammengefasst; es ist deshalb unmöglich diese einzeln auszubauen und zu ersetzen.

Weiter ist aus der DE-A-34 35 411 ein Einhebel-Mischventil mit einem Steuerscheibenpaket aus Keramik bekannt. In ein zylindrisches Ventilgehäuse sind in axialer Richtung von der Zulaufseite her eine aus dem Steuerscheibenpaket bestehende Mengen- und Temperatursteuervorrichtung, eine als gesonderte Einheit ausgebildete Druckausgleichsvorrichtung und eine in einen Gewindestutzen des Ventilgehäuses eingeschraubte Anschlussbuchse montiert. Die wie das Steuerscheibenpaket im wesentlichen in axialer Richtung durchströmte Druckausgleichsvorrichtung ist mittels der Anschlussbuchse gegen das Steuerscheibenpaket gezogen.

Die vorliegende Erfindung bezweckt die Schaffung eines Einhebel-Mischventils der genannten Art, das einen einfachen und voneinander jeweils unabhängigen Austausch des Steuerscheibenpaketes bzw. der Druckausgleichsvorrichtung als Einheit ermöglicht. Das Mischventil gemäß Erfindung weist die Merkmale des Anspruchs auf.

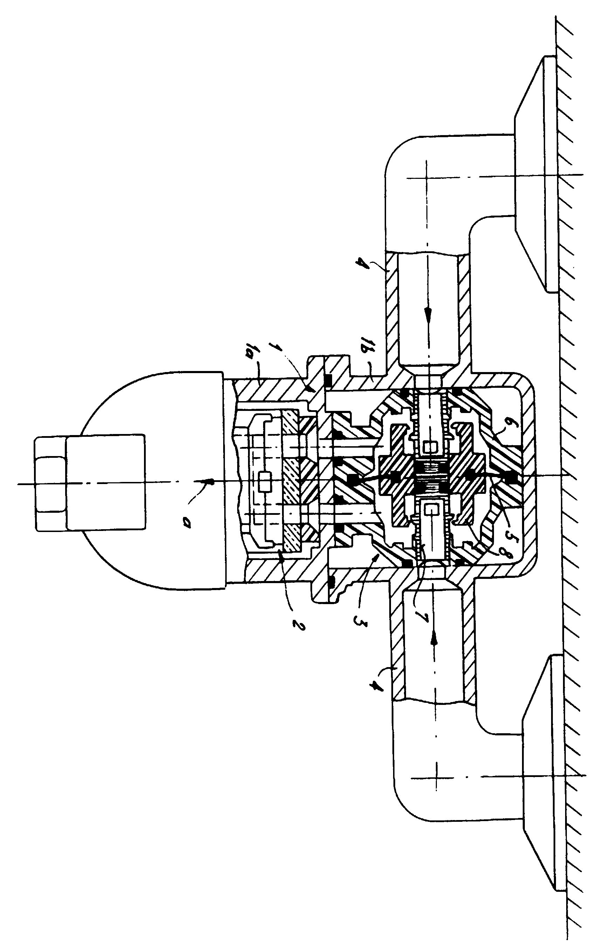

Ein Ausführungsbeispiel der Erfindung ist in der Zeichnung dargestellt, die in Draufsicht und teilweisem Schnitt ein Aufputz-Einhebelmischventil zeigt.

In der Zeichnung ist 1 das zweiteilige Gehäuse des Mischventils, das im Gehäuseteil 1a ein Keramik-Steuerscheibenpaket 2 und im Gehäuseteil 1b eine vorgeschaltete Druckausgleichsvorrichtung 3 enthält. Steuerscheibenpaket 2 und Druckausgleichsvorrichtung 3 sind als auswechselbare Einheiten in die entsprechenden Gehäuseteile 1a, 1b eingebaut. Im Bereich der Druckausgleichsvorrichtung 3 münden im anschlussseitigen Gehäuseteil 1b die zueinander koaxialen, rechtwinklig zur Durchströmrichtung a des im bedienungsseitigen Gehäuseteil 1a angeordneten Steuerscheibenpakets 2 verlaufenden Kalt- und Warmwasser-Zuführstutzen 4, die ihrerseits Winkelstutzen sind und in üblicher Weise zu den Wasseranschlüssen in der Wand führen.

Beim gezeichneten Beispiel besitzt die Druckausgleichsvorrichtung einen mittels einer Membran 5 im Vorrichtungsgehäuse 6 quer zur Durchflussrichtung a beweglich auf dem Trennsteg einer Doppelhülse 7 geführten Doppelkolben 8. Die beiden innen radial gelochten Hülsenteile der Doppelhülse 7 münden aussen je in einen der beiden mit ihnen fluchtenden Anschlussstutzen 4. Innenflansche der beiden Kolbenteile des Doppelkolbens 8 begrenzen im Zusammenwirken mit Aussenrippen der Hülsenteile je nach durch den Druck der beiden zufliessenden Wasserströme gegebener Stellung des Doppelkolbens 8 die in der Druckausgleichsvorrichtung aus den Zuführstutzen 4 durch die Querwand des bedienungsseitigen Gehäuseteils 1a hindurch in die Durchlässe des Steuerscheibenpakets um 90° umgelenkten Wasserströme so, dass deren Drücke am Eintritt in die Durchlasskanäle des Steuerscheibenpakets unter sich gleich sind.

Wie aus der Zeichnung ersichtlich, sind die Zuführstutzen 4 innerhalb der Gehäuselänge und nicht wie bei bekannten Ausführungen am wandseitigen Stirnende des Gehäuses an dieses angeschlossen. was beim gezeichneten Ueberputzventil zu einem entsprechend geringen Wandabstand der wandfernsten Ventilteile führt. Bei einem Unterputzventil gleicher Bauart führt dies zu einer entsprechend geringen Einbautiefe; beides ist ganz allgemein insbesondere aber für Dusche-Mischventile von erheblichem Vorteil.

Obwohl hier ein Mischventil mit Membran-Druckausgleichsvorrichtung gezeigt ist, könnte letztere auch eine Druckausgleichsvorrichtung mit in einem Zylinder verschiebbaren Doppelkolben sein; wesentlich ist nur, dass die stets notwendige 90°-Umlenkung der seitlich zugeführten Wasserströme nicht vor, sondern innerhalb der Druckausgleichsvorrichtung erfolgt.

## Patentansprüche

1. Mischventil mit einer durch ein Steuerscheibenpaket (2) gebildeten Mengen- und Temperatursteuervorrichtung, der in Durchströmrichtung (a) des Steuerscheibenpakets (2) gesehen eine Druckausgleichsvorrichtung (3) vorgeschaltet ist, und einem Ventilgehäuse (1), in dem die Mengen- und Temperatursteuervorrichtung und die Druckausgleichsvorrichtung (3) angeordnet sind und das aus zwei in Durchströmrichtung (a) hintereinander angeordneten Gehäuseteilen (1a,1b) besteht, wobei ein Kalt- und ein Warmwasserzuführstutzen (4) radial zur Durchströmrichtung (a) durch die Wand des Ventilgehäuses (1) in die Druckausgleichsvorrichtung (3) münden und in dieser eine Strömungsumlenkung um 90° erfolgt, dadurch gekennzeichnet, dass das Mischventil als Einhebel-Mischventil ausgeführt ist; dass das Steuerscheibenpaket (2) aus Keramik besteht; dass der eine bedienungsseitige Gehäuseteil (1a) das, als gesonderte Einheit ausgebildete und als solche auswechselbare, Steuerscheibenpaket (2) enthält und der andere Gehäuseteil (1b) die, ebenfalls als gesonderte Einheit ausgebildete und als solche austauschbare, Druckausgleichsvorrichtung (3) enthält; und dass der bedienungsseitige Gehäuseteil (1a) eine Querwand aufweist, durch die hindurch die Druckausgleichsvorrichtung (3) und das Steuerscheibenpaket (2) strömungsverbunden sind.

## Claims

1. Mixing valve having a quantity and temperature control device comprised of a port plate package (2) to which, seen in the direction of flow (a) of the port plate package (2), a pressure equalizer device (3) is connected in series, and a valve housing (1) in which are arranged the quantity and temperature control and the pressure equalizer device (3) and which consists of two housing parts (1a, 1b), arranged one behind the other in the direction of flow, whereby a cold and a warm water feed connection (4) empties into the pressure equalizer device (3) through the wall of the valve housing (1) radially to the throughflow direction (a), in which pressure equalizer device a flow deflection of 90° takes place, **characterized in that** the mixing valve is constructed as a single lever mixing valve, in that the port plate package is made of ceramics; that the housing part 1(a) on the service side contains the port plate package (2) which is constructed as a separate unit and as such can be replaced; and the other housing part (1b) contains the pressure equalizer device (3), which is also constructed as a separate unit and as such can be replaced; and that the service side of the housing part (1a) includes a transverse wall, through which the pressure equalizer device (3) and the port plate package (2) are flow connected.

## Revendications

1. Robinet mélangeur comprenant un dispositif de réglage de débit et de température, formé par un paquet de disques de commande (2) et en amont duquel, en observant dans la direction de passage d'écoulement (a), est monté un dispositif d'équilibrage de pression (3), et comportant un boîtier de robinet (1) dans lequel sont disposés le dispositif de réglage de débit et de température et le dispositif d'équilibrage de pression (3), et boîtier composé de deux parties (la, 1b), disposées l'une derrière l'autre dans la direction d'écoulement, des tubulures d'amenée d'eau froide et d'eau chaude (4) traversant la paroi du boîtier de robinet (1) radialement à la direction de l'écoulement (a), pour déboucher dans le dispositif d'équilibrage de pression (3) et une déviation de l'écoulement de 90° ayant lieu dans ce dernier, caractérisé en ce que le robinet mélangeur est réalisé sous forme de robinet mélangeur à monocommande ; en ce que le paquet de disques de commande (2) est en céramique; et en ce qu'une première partie de boîtier (1a), disposée du côté de la manoeuvre, contient le paquet de disques de commande (2), réalisé sous forme d'unité séparée et donc remplaçable en tant que tel, et l'autre partie de boîtier (1b) contient le dispositif d'équilibrage de pression (3), réalisé également sous forme d'unité séparée et donc remplaçable en tant que tel, et en ce que la partie de boîtier (1a), disposée du côté de la manoeuvre, présente une paroi transversale, à travers laquelle est établie une communication hydraulique entre le dispositif d'équilibrage de pression (3) et le paquet de disques de commande (2).
